# EUROPEAN PATENT APPLICATION

(11) **EP 4 815 363 A1**
(43) Date of publication of application: **30.09.2026**
(21) Application number: 24919011.7
(22) Date of filing: 30.12.2024
(51) Int. Cl.: H04L 9/08

(54) **METHOD FOR DETERMINING WHETHER EAVESDROPPER EXISTS ON QUANTUM CHANNEL OF PLUG-AND-PLAY QUANTUM CRYPTOGRAPHY COMMUNICATION SYSTEM BY USING TDC, AND QUANTUM ENCRYPTION KEY DISTRIBUTION DEVICE THEREFOR**

(30) Priority: 18.01.2024 KR 20240008195
(71) Applicant: SDT Inc., Seoul 06211 (KR)
(72) Inventor: PARK, Byung Kwon, Suwon-si Gyeonggi-do 16238 (KR)
(74) Representative: Manasse, Uwe
(86) International application number: PCT/KR2024/021441
(87) International publication number: WO 2025/154987

(57) **Abstract**

A sender apparatus determining the existence of an eavesdropper present on a quantum channel in a plug-and-play type QKD system is disclosed. The sender apparatus is configured to detect a continuous pair of laser pulses delivered through the quantum channel, and includes a photodetector outputting a laser pulse detection signal including a continuous pair of electrical pulses corresponding to the detected pair of laser pulses, and a TDC measuring the time interval between the pair of electrical pulses. Information regarding the measured time interval is used to determine whether an eavesdropper exists on the quantum channel.

## Description

### Technical Field

The present invention relates to quantum encryption key distribution technology, and more particularly, to a technology for determining the existence of an eavesdropper on a quantum channel of a plug-and-play quantum cryptography communication system using a Time to Digital Converter (TDC).

### Background Art

Quantum cryptography (quantum key distribution) technology is a field of quantum information technology. Quantum cryptography technology is a digital information technology utilizing the principles of quantum physics and is a physical layer security technology for communication networks. Since the safety of quantum cryptography technology is based on the principles of quantum mechanics, eavesdropping and wiretapping are impossible, and its safety is absolutely guaranteed. Wired quantum cryptography technology can utilize existing buried optical fiber facilities, making commercialization possible.

Unlike asymmetric public-key cryptosystems such as the RSA cryptosystem, a symmetric cryptosystem where a sender and a receiver share a one-time pad and use it as an encryption key guarantees absolute safety. Quantum cryptography technology is a technology that safely distributes such one-time pads between a sender (transmitting device) and a receiver (receiving device) in real-time based on the laws of quantum physics, such as the no-cloning theorem, and is also referred to as "Quantum Key Distribution (QKD)" technology.

Generally, in quantum cryptography communication, two types of communication channels are used: a quantum channel (secret channel) for transmitting quantum states, and a classical channel (public channel) that is completely open to the outside, including eavesdroppers (=attackers). That is, while the quantum channel is a communication channel that becomes the core of quantum cryptography communication and maintains complete secrecy due to the quantum no-cloning principle, the classical channel is a communication channel used to publicly compare bases randomly selected by the sender (Alice) and the receiver (Bob) or to publicly compare a part of the generated encryption key to detect an eavesdropper. It refers to an existing digital optical transmission channel or a wireless communication channel. In quantum cryptography communication, all channels are fundamentally considered channels where an eavesdropper can freely eavesdrop or wiretap. The classical channel is necessary for quantum key distribution itself, such as for the sender (Alice) and receiver (Bob) to compare each other's bases, but on the other hand, it is also absolutely necessary for the function of publicly authenticating each other. That is, if there is no classical channel, the encryption key may be leaked by a so-called impersonation attack where an eavesdropper mimics the sender (Alice) or receiver (Bob) in the middle. Thus, the classical channel or public channel is a key element of quantum cryptography communication and must be considered importantly when implementing a practical quantum cryptography communication system. However, in that existing developed technologies are used, the quantum cryptography communication channel referred to in this specification refers to the quantum channel used for quantum state transmission.

There are two physical implementation methods for the quantum encryption communication channel: a method using optical fibers (wired) and a method distributing encryption keys through the atmosphere (wireless). The method using optical fibers uses single-mode optical fibers, which are standard in existing optical communications, maintaining spatial modes very well. Also, the transmission loss in the 1550nm band is very low at about 0.2dB/km, making it suitable for implementing long-distance quantum encryption channels.

The encryption key of quantum cryptography communication can be implemented in various ways, such as coding using light polarization, phase coding, frequency coding, or coding using continuous variables. Coding technology using light polarization or phase requires additional technology to continuously compensate for this because fluctuations in polarization or optical path occur due to temperature or surrounding environments.

The BB84 protocol, a quantum encryption protocol using two bases (X basis and Y basis), uses four quantum states forming two bases. For example, it uses four polarization states possessed by a single photon.

The usual method for the sender (Alice) and receiver (Bob) to share an encryption key and determine the presence of an eavesdropper (Eve) is as follows. First, in step 1, the sender (Alice) randomly selects one of the X basis or Y basis. In step 2, the sender (Alice) randomly chooses one of the two quantum states (encryption key values), i.e., 0 or 1, of the selected basis and sends it to the receiver (Bob). In step 3, the receiver (Bob) receiving the quantum state also randomly selects one of the two bases. In step 4, the receiver (Bob) measures the received quantum state using the selected basis. In step 5, after the measurement by the receiver (Bob) is finished, the sender (Alice) and receiver (Bob) publicly disclose the bases they randomly selected to each other. If the bases selected by the sender (Alice) and receiver (Bob) are the same, the result measured by the receiver (Bob) matches the quantum state randomly chosen by the sender (Alice), and thus the two users come to have the same encryption key (sifted key).

If an eavesdropper (Eve) attempts to eavesdrop in the middle, errors are created in the encryption key values obtained by the two users (Alice and receiver (Bob)) due to the basic principles of quantum mechanics. By publicly disclosing a part of the generated key to each other and calculating the error rate, the sender (Alice) and receiver (Bob) can know the presence of the eavesdropper (Eve).

Eavesdropping methods that an eavesdropper (Eve) can perform can be largely divided into two types: an individual attack (individual attack, incoherent attack) attempting to access only one qubit at a time, and a joint attack (joint attack, coherent attack) obtaining information by accessing several qubits at once.

As an embodiment of the individual attack method, an intercept-resend attack can be cited. In this method, the eavesdropper (Eve) intercepts the qubit sent by the sender (Alice) to the receiver (Bob), performs a measurement she desires, and then sends a qubit in a state favorable to herself to the receiver (Bob). The basis measured by the eavesdropper (Eve) may be randomly chosen by herself from among the two bases of the BB84 protocol, or she may measure in an intermediate basis of the two bases.

As another embodiment of the individual attack method, there is a cloning attack (symmetric individual attack). This is a method of performing quantum cloning on the qubit being transmitted. Although perfect cloning is impossible quantum mechanically (no cloning theorem), it is a form of attack that obtains partial information about the encryption key.

These attack methods are attacks on perfect quantum encryption devices, and they are detected by the user by generating errors in the encryption keys of the sender (Alice) and receiver (Bob). In addition to these methods, there are attack methods that exploit the vulnerabilities of the devices used in the quantum encryption system.

Due to practical limitations related to instability such as phase, polarization, and birefringence in long-distance optical fibers, a 'Plug and Play' structure and a bidirectional QKD structure like the Sagnac QKD structure were developed. In particular, the 'Plug and Play' structure is widely used in commercial QKD systems. In this system, the receiver (Bob) first sends two strong laser pulses (signal laser pulse and reference laser pulse) to the sender (Alice). The sender (Alice) uses the reference laser pulse as a synchronization signal to activate a phase modulator. Then, the sender (Alice) modulates only the phase of the signal laser pulse, attenuates the reference laser pulse and signal laser pulse to a single photon level, and sends them back to the receiver (Bob). Since the sender (Alice) allows signals to enter and leave the sender's (Alice) device, a potential backdoor exists through which an eavesdropper (Eve) can initiate various attacks. One of these is a phase-remapping attack. Therefore, to build a system safe from quantum hacking, the sender (Alice) must continuously monitor the incoming signals (signal laser pulse and reference laser pulse).

In the conventional 'Plug and Play' QKD system, there is a need to detect whether an eavesdropper or attacker exists on the quantum channel

### Detailed Description of the Invention

### Technical Problem

According to the prior art, to detect an eavesdropper, the ratio of errors existing in the completely generated encryption key is used, so the presence of an eavesdropper or attacker existing on the quantum channel cannot be detected in real-time even if a specific quantum hacking technique is performed. The present invention aims to provide a technology capable of detecting the presence of an attacker (Eve) in real-time based on the difference in reception times of laser pulses transmitted by the receiver (Bob).

### Technical Solution

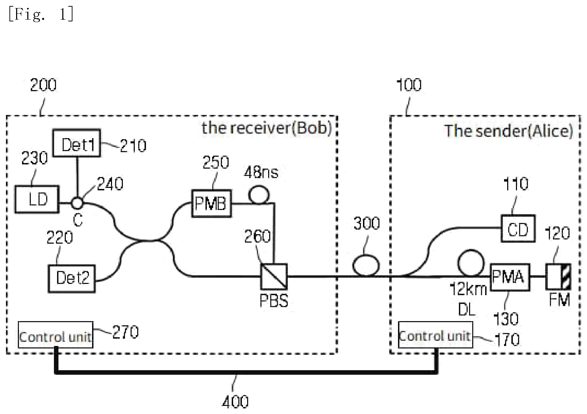

FIG. 1 is a diagram showing a Plug-and-Play type QKD system provided according to an embodiment.

The sender (Alice)(100) and the receiver (Bob)(200) are connected to each other via a quantum channel (300) and a public channel (400).

The receiver (Bob)(200) may include a Laser Diode (LD)(230), a first single-photon detector (Det1)(210), a second single-photon detector (Det2)(220), a receiving-side Phase Modulator (PMB)(250), a Circulator (C)(240), a Polarization Beam Splitter (PBS)(260), and a receiving-side control unit (270).

The sender (Alice)(100) may include a conventional photodetector (CD; Classical Detector)(110), a Delay Line (DL), a Faraday Mirror (FM)(120), a transmitting-side Phase Modulator (PMA)(130), and a transmitting-side control unit (170).

The transmitting-side control unit (170) and the receiving-side control unit (270) can exchange predetermined information through the public channel (400) via communication units not shown. The predetermined information may include information regarding a series of bases used by the transmitting-side control unit (170) and the receiving-side control unit (270).

The public channel (400) is a communication channel used to publicly compare bases randomly selected by the sender (Alice) and receiver (Bob) or to publicly compare a part of the generated encryption key to detect an eavesdropper. The public channel (400) may be an existing digital optical transmission channel or a wireless communication channel.

The photodetector (110) cannot detect single photons but is a device capable of detecting laser pulses stronger than single photons.

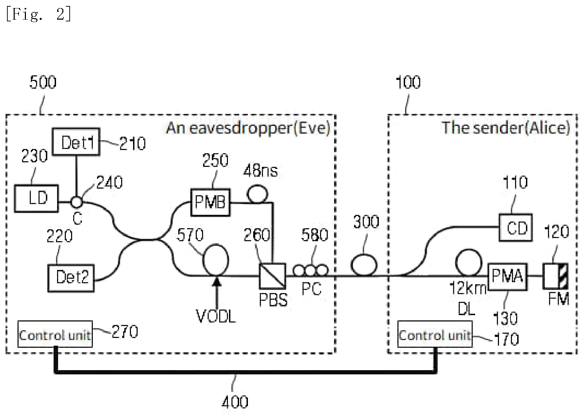

FIG. 2 shows an example of an intercept-resend method where an eavesdropper (Eve) intercepts the quantum channel between the sender (Alice) and the receiver (Bob) of FIG. 1, intercepts the laser pulses sent by the receiver (Bob), and resends them through the quantum channel.

In FIG. 2, the receiver (Bob) is not shown. The eavesdropper (Eve)(500) intervenes in the quantum channel (300) and can operate by deceiving as if she were the receiver (Bob).

The eavesdropper (Eve)(500) may include the same components as the receiver (Bob)(200), a Variable Optical Delay Line (VODL)(570), and a Polarization Controller (PC)(580).

FIG. 3 is a diagram of the phase modulation (PM) signal of the sender (Alice).

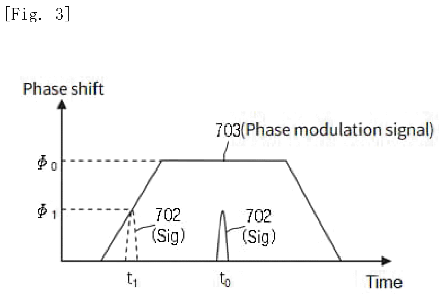

In FIG. 3, t₀ is the original time when the signal laser pulse of the receiver (Bob)(200) is properly modulated to have a phase *ϕ*₀. The eavesdropper (Eve) can perform an attack that shifts the signal laser pulse from time t₀ to time t₁. The shifted pulse comes to have a new modulation phase *ϕ*₁.

The signal laser pulse of the receiver is the laser pulse emitted using the laser diode (230) by the receiver (Bob)(200).

LiNbO3 waveguide phase modulators are generally used to encode random bits in fiber-based phase-coding BB84 QKD systems. In reality, the phase modulator has a finite response time as shown in FIG. 3. Ideally, the signal laser pulse of the receiver (Bob)(200) is properly modulated by passing through the phase modulator (130) of the sender (Alice)(100) in the middle of the modulation signal (time t₀ in FIG. 3). However, if the eavesdropper (Eve)(500) changes the time difference between the reference laser pulse and the signal laser pulse, the signal laser pulse passes through the phase modulator (130) of the sender (Alice)(100) at a different time (time t₁ in FIG. 3), so the encoded phase changes. Originally, the sender (Alice)(100) encodes {0₁ (bit '0' of basis 1), 0₂ (bit '0' of basis 2), 1₁ (bit '1' of basis 1), 1₂ (bit '1' of basis 2)} using {0,π/2, π, 3π/2}. Now, after the remapping process of the eavesdropper (Eve)(500), the phases encoded by the sender (Alice) {0, π/2, π, 3π/2} are mapped to {0, *ϕ*₁, *ϕ*₁ + *ϕ*₂, *ϕ*₁ + *ϕ*₂ + *ϕ*₃}. Here, *ϕ*ᵢ (i = 1, 2, 3) is the new phase difference between two adjacent states. To simplify the explanation, it can be assumed that the phase modulator

(130) has the same rise time and proportional phase modulation for each encoded phase (i.e., *ϕ*₁ = *ϕ*₂ = *ϕ*₃). Or, for a more general explanation, the exact value of *ϕ*ᵢ can be seen as dependent on the time shift introduced by the eavesdropper (Eve) and the actual phase modulation system. Through the phase remapping process, the eavesdropper (Eve)(500) can initiate a new 'intercept-resend' attack, i.e., a phase remapping attack. For example, the actual attack strategy may be as follows.

(1) The eavesdropper (Eve)(500) intercepts the strong pulses from the receiver (Bob)(200) and can send time-shifted pulses to the sender (Alice)(100) through her device (500). The eavesdropper (Eve)(500) can change the actual values of *ϕ*ᵢ (i = 1, 2, 3) by changing the time displacement.

(2) The strategy of the eavesdropper (Eve)(500) is to distinguish {0₁} from {0₂, 1₁, 1₂} or distinguish {1₂} from {0₁, 0₂, 1₁} with minimal error. To distinguish {0₁}, the eavesdropper (Eve)(500) introduces a phase shift of *ϕ*₁ + *ϕ*₂ using her phase modulator (250) on the reference pulse sent back by the sender (Alice)(100) (attenuated reference pulse) and performs interference measurement. If detected in detector 1 (Det1)(210), the eavesdropper (Eve)(500) sends the standard BB84 state {0₁} to the receiver (Bob). Otherwise, the eavesdropper (Eve)(500) simply discards it. A similar procedure is performed to identify {1₂}, where the eavesdropper (Eve)(500) introduces a phase shift of *ϕ*₁. Here, the phase shift *ϕ*₁ of the eavesdropper (Eve)(500) can be defined as basis X, and *ϕ*₁+ *ϕ*₂ as basis Y.

After the Mach-Zehnder interferometer, if the phase difference between the attenuated reference pulse and the reduced signal pulse is π, it is detected in detector 1 (210), and if the phase difference is 0, it is detected in detector 2 (220).

Assuming the eavesdropper (Eve)(500) uses basis Y to identify {0₁}, when the sender (Alice)(100) sends different states {0₁, 0₂, 1₁, 1₂}, the detection probabilities of detector 1 (Det1)(210) are { P(0₁), P(0₂), P(1₁), P(1₂)} = { sin((*ϕ*₁ + *ϕ*₂)/2)^2, sin(*ϕ*/2)^2, 0, sin(*ϕ*₃/2)^2}. After the attack by the eavesdropper (Eve)(500), the introduced error probabilities are {0, 1/2, 1, 1/2}. Analysis for basis X can be performed in the same manner. In this case, the total QBER for basis X and basis Y is QBER = sin(*ϕ*/2)^2/ {sin(*ϕ*)^2 + 2sin(*ϕ*/2)^2}

Description is made again with reference to FIG. 2.

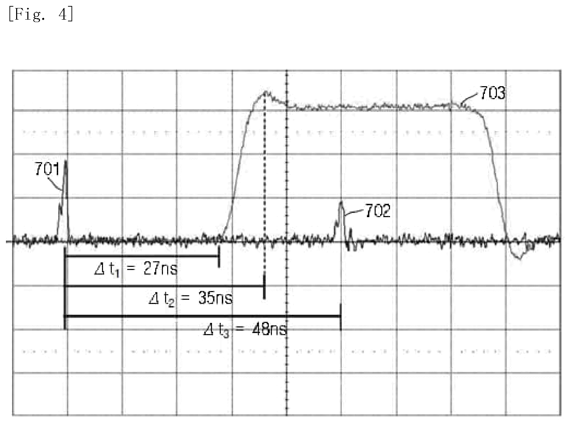

The phase remapping attack can be implemented as shown in FIG. 2. The signal laser pulse of the receiver (Bob)(200) of the original QKD system, the reference laser pulse, and the phase modulation signal of the sender (Alice)(100) are shown in FIG. 4.

FIG. 4 shows the reference laser pulse (Ref) and signal laser pulse (Sig) observable at the sender (Alice), and the time pattern of the phase modulation signal. In FIG. 4, the encoding phase of the sender (Alice) is {*π*}, and only the pulses input to the sender (Alice) (forward pulses) are shown.

In FIG. 4, since the sender (Alice)(100) uses the reference laser pulse (701) as a trigger signal, the time delay Δt₁ is determined by the internal delay of the sender (Alice)(100) system and cannot be controlled by the eavesdropper (Eve)(500). On the other hand, since the sender (Alice)(100) normally does not monitor the arrival time of the signal laser pulse (702) in the system, the eavesdropper (Eve)(500) can change the time delay Δt₃ without being detected. Also, while the rising edge time (10-90%) of the phase modulation signal (703) is about 6ns, the width of the laser pulse is about 500ps (width at half maximum). The eavesdropper (Eve)(500) can easily place her (500) pulse on the rising edge to obtain partial phase modulation. Opening a security hole in this manner, the eavesdropper (Eve)(500) can initiate a phase remapping attack.

A situation can be assumed where the eavesdropper (Eve)(500) initiates an attack using the same settings as the receiver (Bob)(200). At this time, the eavesdropper (Eve)(500) can modify the short arm length of the Mach-Zehnder interferometer by adding a Variable Optical Delay Line (570) (VODL in FIG. 2) to shift the time delay between the reference laser pulse (701) and the signal laser pulse (702).

According to an aspect of the present invention, a transmission device (100) for determining the presence of an eavesdropper (500) present on a quantum channel (300) in a plug-and-play QKD system can be provided. The transmission device is configured to detect a continuous pair of laser pulses delivered through the quantum channel (300), and includes a photodetector (110) outputting a laser pulse detection signal (800) including a continuous pair of electrical pulses corresponding to the detected pair of laser pulses; and a TDC (150) measuring the time interval between the pair of electrical pulses. Information regarding the measured time interval is used to determine whether an eavesdropper exists on the quantum channel.

At this time, the transmission device may further include a control unit (170). In this case, the control unit may be configured to determine that an eavesdropper exists on the quantum channel if the measured time interval is different from a predetermined reference time interval.

At this time, the pair of laser pulses are configured to be transmitted back to the quantum channel after their energy is attenuated, and the phase of one of the pair of laser pulses is configured to be modulated.

At this time, the transmission device is configured to randomly select one basis from among a plurality of bases for the modulation, and the transmission device is configured to randomly select one quantum state from among a plurality of quantum states and encode the signal laser pulse into the selected quantum state.

At this time, the time interval may be the time difference between the rising edge of the first electrical pulse generated first among the pair of electrical pulses and the rising edge of the second electrical pulse generated later.

At this time, the TDC may include a first delay line part (20) to which an input pulse having a width equal to the time difference between the first generation time point of the first electrical pulse and the second generation time point of the second electrical pulse is input; and a calculation part (60) determining the time interval using a thermometer code output by the first delay line part.

At this time, the TDC may further include a code conversion part (30) that outputs by converting the order of elements of the thermometer code. The calculation part is configured to determine the generation time difference using the converted code output by the code conversion part, wherein the converted code is obtained by sorting the order of the elements of the thermometer code according to a predetermined criterion, and the predetermined criterion may be the data path delay from the output node of the input pulse to the output nodes of each of the plurality of flip-flops (FF) included in the first delay line part.

At this time, the TDC is implemented by any one device among FPGA (Field Programmable Gate Array), ASIC (Application Specific Integrated Circuit), and IC (Integrated Circuit), and any one of the devices may be programmed to include the first delay line part and the calculation part.

At this time, the TDC may further include a second delay line part to which the input pulse is input, and the code conversion part is configured to generate the converted code by arranging and merging the elements of the thermometer code output by the first delay line part and the elements of the thermometer code output by the second delay line part according to a predetermined second criterion, wherein the predetermined second criterion may be the data path delay from the output node of the input pulse to the output nodes of each of the plurality of flip-flops included in the first delay line part and the second delay line part.

At this time, the TDC may be configured to use a clock signal (clk) having a period shorter than the time difference between the pair of laser pulses output by the receiving device of the QKD system. And the TDC generates the input pulse having a width equal to the time difference between the rising edge generation time point of the first electrical pulse and the rising edge generation time point of the second electrical pulse; an input signal generation part (10); a clock pulse counting part (40) counting the number of clock pulses of the clock signal generated during the holding period of the input pulse; and may further include a calculation part determining the value of the generation time difference using the first thermometer code (TC1) output by the code conversion part at the time of the rising edge of the first clock pulse among the generated clock pulses, the second thermometer code (TC2) output by the code conversion part at the time of the rising edge of the clock pulse generated immediately after the last clock pulse among the generated clock pulses, and the number of counted clock pulses.

According to another aspect of the present invention, an FPGA included in a plug-and-play type QKD system, configured to construct a digital circuit including a signal receiving part (71) receiving a laser pulse detection signal (800) including a continuous pair of electrical pulses generated from a photodetector included in a transmission device of the QKD system; and a time difference determination part (72) configured to determine the time interval between the pair of electrical pulses, may be provided in a non-volatile recording medium readable by an electronic device, on which a binary file including configuration data for programming the FPGA is recorded.

At this time, the digital circuit may further include an eavesdropping judgment part (73) determining that an eavesdropper exists on the quantum channel when the determined time interval is different from a predetermined reference time interval.

At this time, the digital circuit may further include a first delay line part (20) to which an input pulse having a width equal to the time difference between the first generation time point of the first electrical pulse generated first among the pair of electrical pulses and the second generation time point of the second electrical pulse generated later is input; and a calculation part (60) determining the time interval using a thermometer code output by the first delay line part.

At this time, the digital circuit may further include a code conversion part (30) that outputs by converting the order of elements of the thermometer code. The calculation part is configured to determine the time interval using the converted code output by the code conversion part, wherein the converted code is obtained by sorting the order of the elements of the thermometer code according to a predetermined criterion, and the predetermined criterion may be the data path delay from the output node of the input pulse to the output nodes of each of the plurality of flip-flops (FF) included in the first delay line part.

At this time, the digital circuit may further include a second delay line part to which the input pulse is input. And the code conversion part is configured to generate the converted code by arranging and merging the elements of the thermometer code output by the first delay line part and the elements of the thermometer code output by the second delay line part according to a predetermined second criterion, wherein the predetermined second criterion may be the data path delay from the output node of the input pulse to the output nodes of each of the plurality of flip-flops included in the first delay line part and the second delay line part.

At this time, the digital circuit is configured to use a clock signal (clk) having a period shorter than the time difference between the pair of laser pulses output by the receiving device of the QKD system. And the digital circuit includes an input signal generation part generating an input pulse having a width equal to the time difference between the rising edge generation time point of the first electrical pulse and the rising edge generation time point of the second electrical pulse; a clock pulse counting part counting the number of clock pulses of the clock signal generated during the holding period of the input pulse; and may further include the calculation part determining the value of the generation time difference using the first thermometer code output by the code conversion part at the time of the rising edge of the first clock pulse among the generated clock pulses, the second thermometer code output by the code conversion part at the time of the rising edge of the clock pulse generated immediately after the last clock pulse among the generated clock pulses, and the number of counted clock pulses.

### Advantageous Effects of Invention

According to the present invention, a technology capable of detecting the presence of an attacker in real-time based on the difference in reception times of a pair of pulses transmitted by a receiver in a plug-and-play method can be provided.

### Brief Description of Drawings

FIG. 1 is a diagram showing a Plug-and-Play type QKD system provided according to an embodiment.
FIG. 2 shows an example of a specific intercept-resend method where an eavesdropper (Eve) intercepts the quantum channel between the sender (Alice) and receiver (Bob) of FIG. 1, intercepts the laser pulses sent by the receiver (Bob), and resends them through the quantum channel.
FIG. 3 is a diagram of the phase modulation (PM) signal of the sender (Alice).
FIG. 4 shows the reference laser pulse (Ref) and signal laser pulse (Sig) observable at the sender (Alice), and the time pattern of the phase modulation signal.

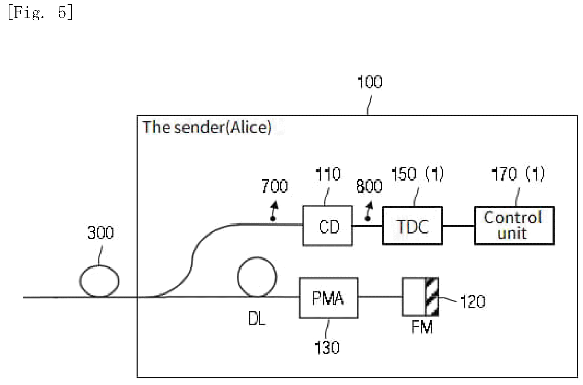

FIG. 5 shows the configuration of the sender (transmission device) (Alice) used in the Plug-and-Play type QKD system provided according to an embodiment of the present invention.

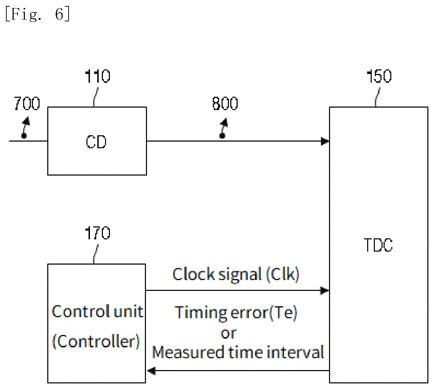

FIG. 6 shows the mutual operation relationship of the photodetector, TDC, and transmitting-side control unit shown in FIG. 5 in more detail.

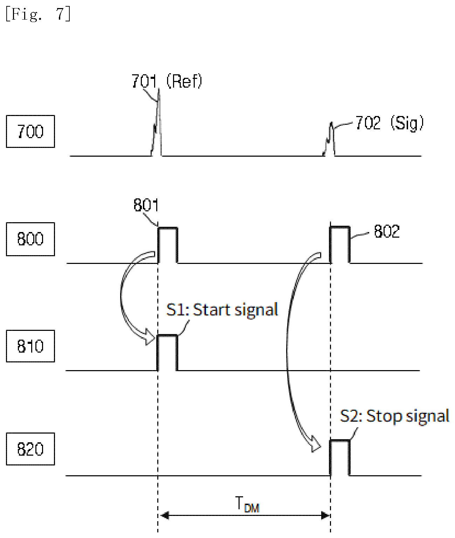

FIG. 7 shows the quantum channel signal, laser pulse detection signal, and the timing alignment relationship of the start signal and stop signal used in the TDC shown in FIG. 5.

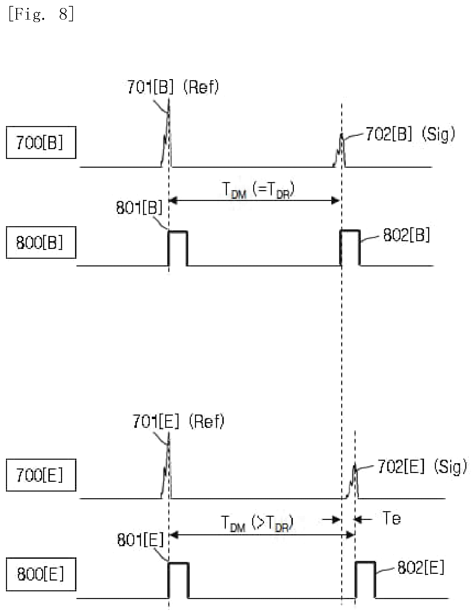

FIG. 8 compares the case where the eavesdropper (Eve) does not exist on the quantum channel and the case where she does.

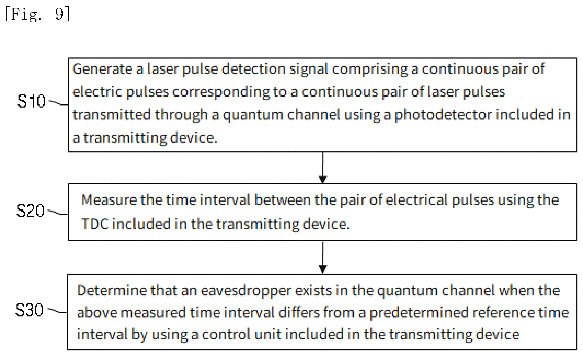

FIG. 9 is a flowchart showing a method for the transmitting device of a Plug-and-Play type QKD system to judge whether an eavesdropper exists on the quantum channel according to an embodiment of the present invention.

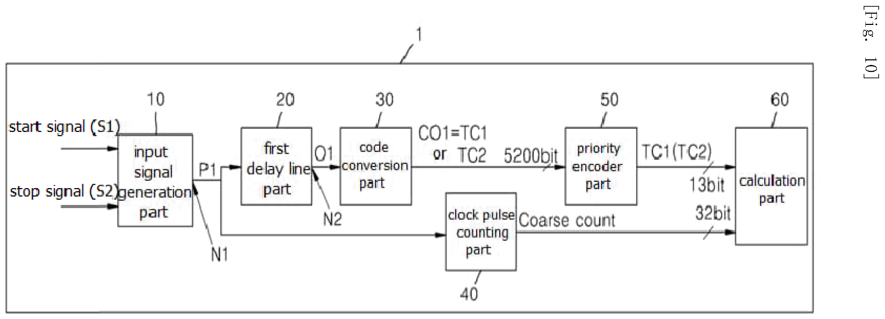

FIG. 10 shows the configuration diagram of an FPGA implementing the TDC according to an embodiment of the present invention.

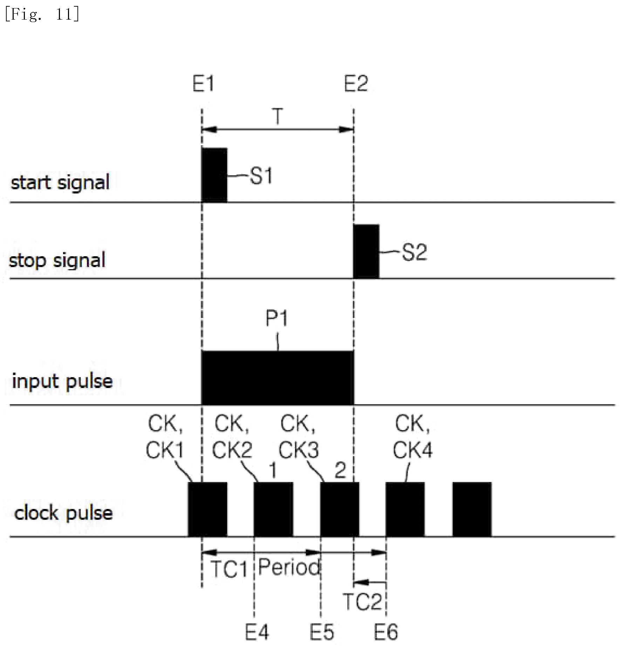

FIG. 11 is a diagram for explaining the input pulse input to the first delay line part of the FPGA according to an embodiment of the present invention.

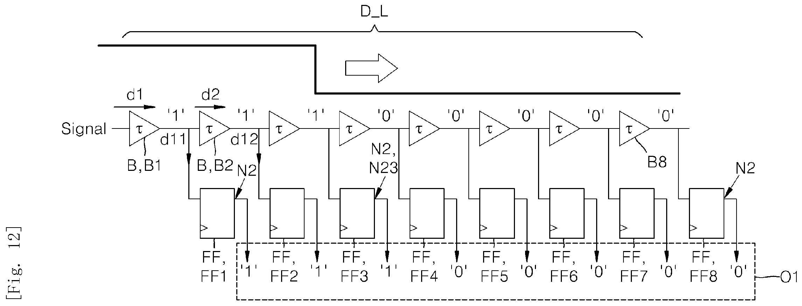

FIG. 12 shows the configuration of the first delay line part according to an embodiment of the present invention.

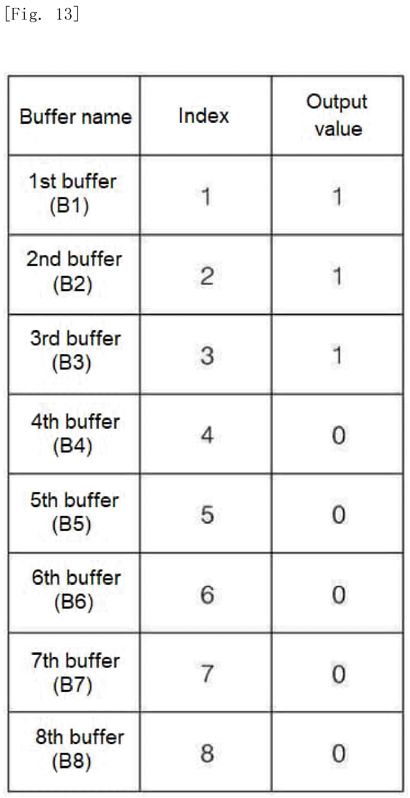

FIG. 13 is a diagram for explaining the indices of buffers in FIG. 12.

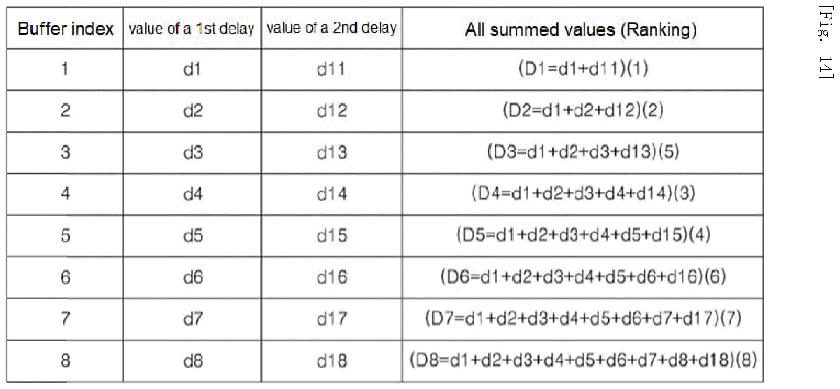

FIG. 14 shows a table for explaining data path delays.

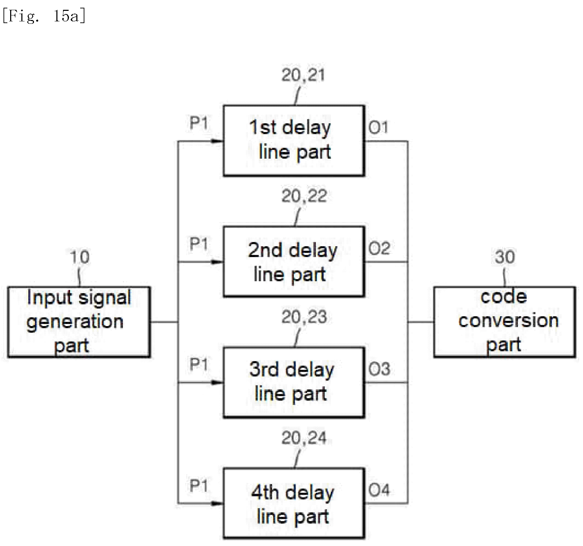

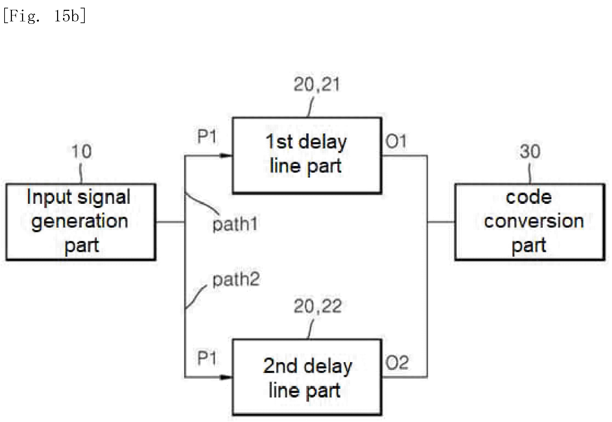

FIG. 15a and FIG. 15b show configurations where a plurality of delay line parts are configured in parallel according to an embodiment of the present invention.

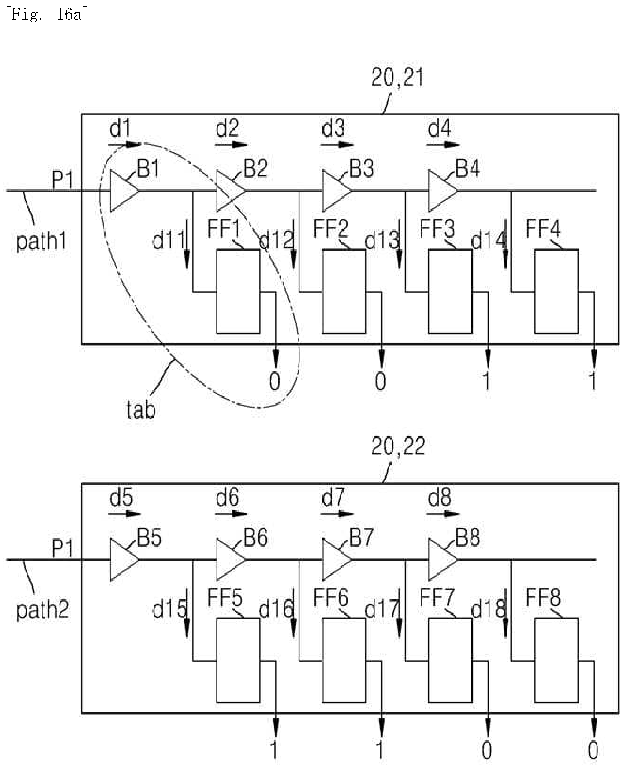

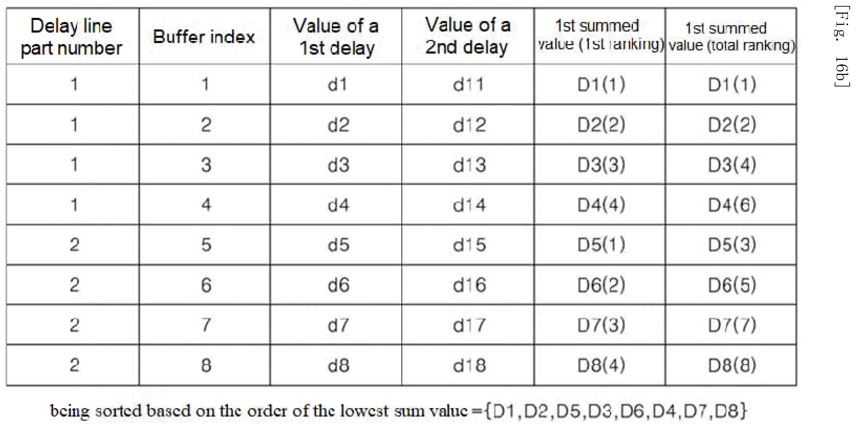

FIG. 16a shows the configuration of the first delay line part and the second delay line part of FIG. 15b, and FIG. 16b is for explaining the operation of the code conversion part when two delay line parts are used according to an embodiment of the present invention.

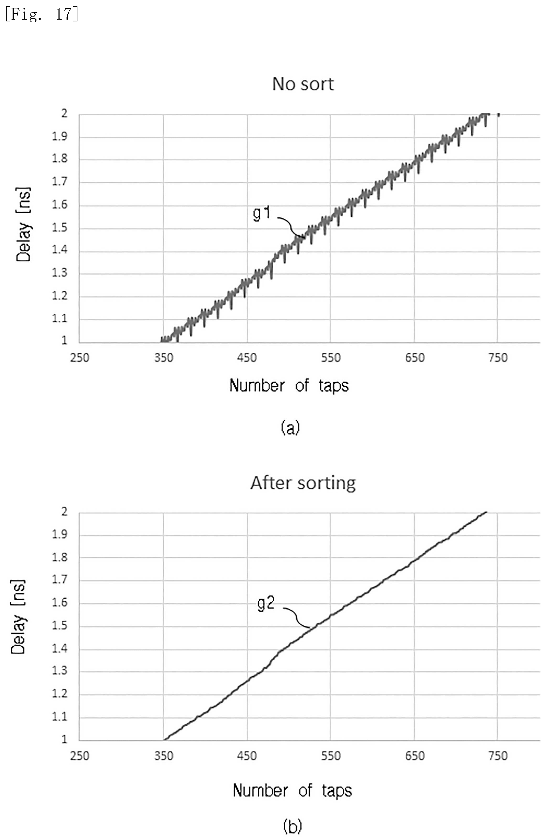

FIG. 17 shows graphs of delay according to the application status of the code conversion part according to an embodiment of the present invention.

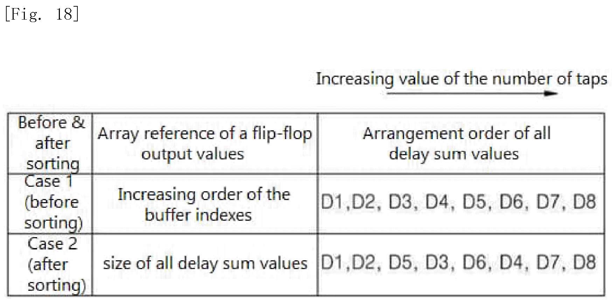

FIG. 18 is a diagram for explaining the arrangement criteria of flip-flop output values and the increment value of the number of taps in FIG. 17 according to the application status of the code conversion part according to an embodiment of the present invention.

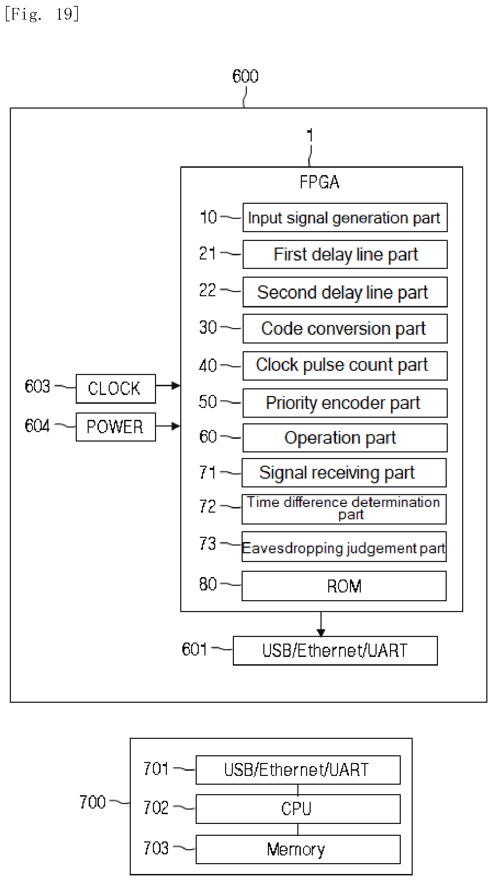

FIG. 19 is a block diagram showing the main functional parts of a PCB board including an FPGA provided according to an embodiment of the present invention.

### Mode for the Invention

Hereinafter, embodiments of the present invention will be described with reference to the accompanying drawings. However, the present invention is not limited to the embodiments described in this specification and may be implemented in various other forms. The terms used in this specification are for helping the understanding of the embodiments and are not intended to limit the scope of the present invention. Also, singular forms used hereinafter include plural forms unless the phrases clearly indicate the opposite meaning.

FIG. 5 shows the configuration of the sender (transmission device) (Alice) used in the Plug-and-Play type QKD system provided according to an embodiment of the present invention.

FIG. 6 shows the mutual operation relationship of the photodetector (110), the TDC (150), and the transmitting-side control unit (170) presented in FIG. 5 in more detail.

FIG. 7 shows the timing alignment relationship of the quantum channel signal (700), laser pulse detection signal (800), start signal, and stop signal used in the TDC presented in FIG. 5.

Hereinafter, description will be made with reference to FIGS. 5 to 7 together.

The sender (Alice)(100) is connected to the quantum channel (300) and can receive laser pulses delivered through the quantum channel (300). The laser pulse may be the aforementioned reference laser pulse or signal laser pulse.

The sender (Alice)(100) may include the photodetector (110), Faraday mirror (120), and transmitting-side phase modulator (130). Also, the sender (Alice)(100) may further include a TDC (150) and a control unit (170) provided according to an embodiment of the present invention.

The input terminal of the TDC (150) may be connected to the output terminal of the photodetector (110).

The output terminal of the photodetector (110) can output a laser pulse detection signal (800). When the photodetector (110) detects one laser pulse of a predetermined intensity or higher from the quantum channel signal (700) at the input part of the photodetector (110), it can output one electrical pulse corresponding to the detected laser pulse. The one electrical pulse can have a constant time width. Therefore, the laser pulse detection signal (800) can be a signal containing an electrical pulse generated by the photodetector (110) whenever a laser pulse is detected in the quantum channel signal (700), i.e., whenever a laser pulse arrives at the sender (Alice)(100) through the quantum channel (300).

When the reference laser pulse is detected from the quantum channel signal (700), the signal laser pulse is configured to be detected within a predetermined time. That is, laser pulses can be detected in units of pairs.

When a pair of laser pulses is detected from the quantum channel signal (700), the photodetector (110) can output a pair of electrical pulses corresponding thereto.

The TDC (150) is configured to determine the time interval (T_{DM}) between the outputted pair of electrical pulses. The TDC (150) may transmit the determined time interval (T_{DM}) itself to the transmitting-side control unit (170), or may calculate an error value (Te) between the determined time interval (T_{DM}) and a preset reference time interval (T_{DR}) and transmit the error value to the transmitting-side control unit (170).

If the error value (Te) is greater than a predetermined value δ, the transmitting-side control unit (170) can determine that an eavesdropper (Eve) exists on the quantum channel (300). Here, the predetermined value δ may be 0 or a predetermined positive number.

The determined result can be provided to a remote server by the sender (Alice)(100) using a communication module.

In FIG. 7, the horizontal axis is the time axis, and the left side represents a time point occurring earlier than the right side.

In FIG. 7, reference numbers 701 and 702 are the reference laser pulse and signal laser pulse received by the sender (Alice)(100) from the quantum channel (300), respectively, and reference numbers 801 and 802 are electrical pulses generated by the photodetector (110) corresponding to the reference laser pulse and signal laser pulse, respectively.

The TDC (150) can regard the first electrical pulse (801) as a start signal (S1) and the second electrical pulse (802) as a stop signal (S2).

The TDC (150) can generate a first internal signal (810) and a second internal signal (820) from the laser pulse detection signal (800). The first internal signal (810) is a signal containing only the first electrical pulse (801) among the laser pulse detection signals (800), and the second internal signal (820) is a signal containing only the second electrical pulse (802) among the laser pulse detection signals (800).

FIG. 8 compares the case where an eavesdropper (Eve) does not exist on the quantum channel (300) and the case where she does.

FIG. 8 is divided into an upper part and a lower part; the upper part shows the case where the eavesdropper (Eve)(500) does not exist on the quantum channel (300), and the lower part shows the case where the eavesdropper (Eve)(500) exists on the quantum channel (300).

When the eavesdropper (Eve)(500) does not exist, the quantum channel signal (700) is given as reference number 700[B] in FIG. 8, and the laser pulse detection signal (800) is given as reference number 800[B] in FIG. 8. The time interval (T_{DM}) between the first electrical pulse (801[B]) and the second electrical pulse (802[B]) of the laser pulse detection signal (800[B]) is equal to the predetermined reference time interval (T_{DR}).

The reference time interval (T_{DR}) is a predetermined value and is equal to the time interval for generating the reference laser pulse and signal laser pulse woven together by the interferometer (250, 260, 48ns delay line) of the receiver (Bob)(200).

When the eavesdropper (Eve)(500) exists, the quantum channel signal (700) is given as reference number 700[E] in FIG. 8, and the laser pulse detection signal (800) is given as reference number 800[E] in FIG. 8. The time interval (T_{DM}) between the first electrical pulse (801[E]) and the second electrical pulse (802[E]) of the laser pulse detection signal (800[E]) may be larger or smaller than the predetermined reference time interval (T_{DR}). The value of this timing error can be denoted by reference symbol Te.

The TDC (150) calculates the time interval (T_{DM}) and/or the timing error (Te) and can provide it to the transmitting-side control unit (170).

To determine the time interval (T_{DM}), the TDC (150) may directly use the laser pulse detection signal (800), or may use the first internal signal (810) and second internal signal (820) generated from the laser pulse detection signal (800) or a clock signal (clk) provided from the control unit (170).

FIG. 9 is a flowchart showing a method for the transmitting device of a Plug-and-Play type QKD system to determine whether an eavesdropper exists on the quantum channel according to an embodiment of the present invention.

In step (S10), the transmission device (100) can generate a laser pulse detection signal (800) including a continuous pair of electrical pulses corresponding to a continuous pair of laser pulses delivered through the quantum channel (300) using the photodetector (110) included in the transmission device.

In step (S20), the transmission device (100) can measure the time interval between the pair of electrical pulses using the TDC (150) included in the transmission device.

In step (S30), the transmission device (100) uses the control unit (170) included in the transmission device to determine that an eavesdropper exists on the quantum channel if the measured time interval is different from a predetermined reference time interval.

Hereinafter, the operation principle of the TDC (150) provided according to an embodiment of the present invention will be described in detail. The TDC (150) is implemented with an FPGA (1). Alternatively, in other embodiments, the TDC (150) may be implemented with an IC or ASIC, etc.

FIG. 10 shows the configuration diagram of an FPGA implementing the TDC according to an embodiment of the present invention.

In the case where the transmitting-side control unit (170) shown in FIG. 5 is implemented with an FPGA, the FPGA (1) implementing the TDC (150) may include the transmitting-side control unit (170).

Unlike this, in the case where the transmitting-side control unit (170) shown in FIG. 5 is not an FPGA, the TDC (150) may be implemented with an FPGA provided separately from the transmitting-side control unit (170).

The TDC (150) may be implemented not with a high-speed FPGA operating at a clock of, for example, 10 GHz, but with a relatively low-speed FPGA operating at a clock of, for example, 100~300 MHz.

FIG. 11 is a diagram for explaining the input pulse input to the first delay line part of the FPGA according to an embodiment of the present invention.

Hereinafter, description will be made with reference to FIG. 10 and FIG. 11 together.

The FPGA (1) may include an input signal generation part (10), a first delay line part (20), a code conversion part (30), a clock pulse counting part (40), a priority encoder part (50), and a calculation part (60).

Specifically, the components of the FPGA (1) described above may be components of a TDC (Time to Digital converter).

As shown in FIG. 10 and FIG. 11, the input signal generation part (10) can generate an input pulse (P1) having a width equal to the generation time difference (T) between the rising edge (E1) of a predetermined given start signal (S1) and the rising edge (E2) of a predetermined given stop signal (S2). The input signal generation part (10) may be composed of logic gates necessary for the generation.

The first delay line part (20) can receive the input pulse (P1) having a width equal to the generation time difference (T) of the start signal (S1) and the stop signal (S2). And the first delay line part (20) can output a thermometer code (01). At this time, the thermometer code consists of output values of flip-flops included in the first delay line part (20), for example, being an 8-bit value, the output value of each flip-flop can be referred to as an element of the thermometer code.

FIG. 12 shows the configuration of the first delay line part according to an embodiment of the present invention.

FIG. 13 is a diagram for explaining the indices of buffers in FIG. 12.

The first delay line part (20) includes a plurality of buffers (delay elements, delay units) (B) and may include D-flip-flops (FF) tapped at the output terminals of each buffer (B) of the delay line (D_L).

The plurality of buffers can be connected in a cascade delay manner. That is, the plurality of buffers can be arranged in the order in which the input pulse (P1) flows.

The waveform (Signal) of the input pulse (P1) of FIG. 12 can be output with a predetermined delay at the output terminal of each buffer (B). That is, the output value of the first buffer (B1) is output with a predetermined delay at the output terminal of the first buffer (B1), and the output terminal of the first buffer (B1) is connected to the input terminal of the second buffer (B2). The output value of the first buffer (B1) (e.g., '1') can also be input to the first flip-flop (FF1).

At this time, a data path delay may occur between each buffer (B) and while passing through the flip-flop (FF). For example, a delay of d1 may occur until the input value ('1') of the first buffer (B1) is delivered to the second buffer (B2), and a delay of d11 may occur until the output value ('1') of the first buffer (B1) is delivered to the first flip-flop (FF1). Similarly, a delay occurs whenever data is delivered from a previous buffer to the next buffer, and a delay can occur whenever data is delivered from an arbitrary buffer to a flip-flop connected to said arbitrary buffer.

FIG. 13 is a diagram for explaining the indices of buffers according to an embodiment of the present invention.

Each field in the table of FIG. 13 represents the buffer name, index, and output value of the buffer.

An index defining the order of each buffer can be assigned to each buffer. For example, index '1' can be assigned to the first buffer (B1), index '2' to the second buffer (B2), and similarly index '8' to the eighth buffer (B8). In this way, when each buffer (B) is arranged according to the order in which the input pulse (P1) flows, indices from 1 to 1000 can be assigned to each of 1000 buffers, for example.

FIG. 14 shows a table for explaining data path delays.

Referring to FIG. 10 and FIG. 14, the code conversion part (30) can convert the order of elements (e.g., 1, 2, 3, 4, 5, 6, 7, 8) of the thermometer code (O1) (e.g., 11100000) output from the first delay line part (20) and output it. At this time, the code output by the code conversion part (30) (e.g., 11010000) (the order of indices of the corresponding buffer is 1, 2, 4, 5, 3, 6, 7, 8) can be referred to as a 'converted code (CO1)'.

The converted code (CO1) output by the code conversion part (30) may be one in which the order of elements of the thermometer code (O1) is sorted according to a predetermined criterion. At this time, the predetermined criterion may be the data path delays up to the output nodes (N2) of each of the plurality of flip-flops (FF) included in the first delay line part (20) from the output node (N1) of the input pulse (P1). This is explained in detail with reference to FIG. 14.

Each field of the table can represent the buffer index number, the value of the first delay, the value of the second delay, and the sum value (rank). At this time, the rank can indicate the rank for the total sum values. At this time, regarding the rank, the buffer with the smallest sum value may have rank 1, and the buffer with the highest sum value may have the last rank. Or the opposite is also possible in other embodiments.

As described above in FIG. 12, the sum value may mean the time taken for data to be delivered from the node (N1) where the input pulse (P1) is output to an arbitrary flip-flop (e.g., FF4).

The time taken for the input value of an arbitrary buffer to be delivered to another buffer consecutive to the arbitrary buffer is the first delay, and the time taken for the output value of the arbitrary buffer to be delivered to the input of the flip-flop connected to the arbitrary buffer is the second delay.

At this time, the value obtained by adding the value of the first delay and the value of the second delay for each buffer can be referred to as the data path delay.

Referring to FIG. 12 and FIG. 14 together, when the indices of each buffer are listed in order, the rank of the sum of the first delay value and the second delay value may differ from the rank of the index number of each buffer. For example, for the 3rd buffer, the buffer arrangement rank is 3rd, but the rank of the sum value may be '5'. Looking closely, for data to be delivered to the 3rd flip-flop (FF3), it passes through the 1st buffer (B1), the 2nd buffer, and the 3rd buffer. At this time, a predetermined delay (d1, d2, d3) occurs whenever it passes through the 1st buffer (B1), 2nd buffer (B2), and 3rd buffer (B3), and a delay (d13) can also occur until the data output from the 3rd buffer (B3) is output to the 3rd flip-flop (FF3). That is, the delay until data is delivered from the output node (N1) of the input pulse (P1) to the output node (N2, N23) of the 3rd flip-flop (FF3) can be the value obtained by summing d1, d2, d3, and d13.

In this way, the delay (i.e., sum value) until data is delivered to the output node of each flip-flop (FF3) can be calculated.

For example, in this embodiment, the buffer index for the 3rd flip-flop (FF3) is 3, and the buffer index for the 4th flip-flop (FF4) is 4. That is, the 4th flip-flop (FF3 [sic - likely FF4]) must pass through one more buffer than the 3rd flip-flop (FF4 [sic - likely FF3]), but despite this, the sum of delays to the output node of the 3rd flip-flop having buffer index 3 can be larger.

The code conversion part (30) can convert the order of elements of the thermometer code (O1) based on the calculated delays (sum values) (e.g., starting from the smallest sum value).

The converted code (CO1) output by the code conversion part (30) can be provided to the priority encoder part (50).

The priority encoder part (50) can digitize a long thermometer code. For example, the priority encoder part (50) can convert a thermometer code of 5200 bits into a thermometer code of 13 bits. For example, if the buffers (delay elements) (B) described in FIG. 12 and the flip-flops (FF) connected to the buffers are 5200 each, a sequence of 5200 consecutive binary numbers is output, which can be expressed as a 13-bit binary number.

That is, the priority encoder part (50) can express the output value (CO1) according to time of the code conversion part (30) as a 13-bit binary number for the first thermometer code (TC1) of 5200 bits and the second thermometer code (TC2) of 5200 bits.

Referring to FIG. 11, the first thermometer code (TC1) is a code output by the code conversion part (30) in relation to the rising edge (E1) of the input pulse (P1) at the time point of the rising edge (E4) of the clock pulse (CK2) generated first after the occurrence of the rising edge (E1) among the generated clock pulses (CK). The first thermometer code (TC1) expressed in 13 bits can be provided to the input of the calculation part (60).

And the second thermometer code (TC2) is a code output by the code conversion part (30) in relation to the falling edge (E2) of the input pulse (P1) at the time point of the rising edge (E6) of the clock pulse (CK4) generated first after the occurrence of the falling edge (E2) of the input pulse (P1) among the generated clock pulses (CK). The second thermometer code (TC2) expressed in 13 bits can be provided to the input of the calculation part (60).

At this time, the time interval of the first thermometer code (TC1) and the time interval of the second thermometer code (TC2) may be smaller than the period (Period) of the clock pulse (CK).

Referring again to FIGS. 10 and 11, the clock pulse counting part (40) can receive the input pulse (P1) from the input signal generation part (10).

The clock pulse counting part (40) can count the number of clock pulses (CK) generated during the holding period (T) of the input pulse (P1). For example, in FIG. 11, since the rising edges of the clock pulses occurring during the period while the input pulse (P1) is in the ON state are 2, such as edges (E4, E5), the counted value can be 2.

The output value (Coarse count) of the clock pulse counting part (40), i.e., the counted value, can be provided to the calculation part (60).

Referring to FIGS. 10 and 11, the calculation part (60) can determine the value of the generation time difference using the first thermometer code (TC1), the second thermometer code (TC2), and the number of counted clock pulses. For example, the generation time difference can be 2*Period + TC1 - TC2.

FIG. 15a and FIG. 15b show configurations where a plurality of delay line parts are configured in parallel according to an embodiment of the present invention.

As shown in FIG. 15a, two or more delay line parts (20) may be connected in parallel. At this time, the input pulse (P1) output from the input signal generation part (10) can be input to each of the first delay line part (21), the second delay line part (22), the third delay line part (23), and the fourth delay line part (24). And the first thermometer code (O1), second thermometer code (O2), third thermometer code (O3), and fourth thermometer code (O4) output from the first delay line part (21), second delay line part (22), third delay line part (23), and fourth delay line part (24) can be input to the code conversion part (30).

As shown in FIG. 15b, it can be assumed that two delay line parts (20) are connected in parallel in another embodiment.

For example, the input pulse (P1) output from the input signal generation part (10) can be provided along a first path (path1) connecting the output terminal of the input signal generation part (10) and the input terminal of the first delay line part (21), and a second path (path2) connecting the output terminal of the input signal generation part (10) and the input terminal of the second delay line part (22), respectively.

At this time, the time for the input pulse (P1) output from the input signal generation part (10) to reach the input terminal of the first delay line part (21) and the input terminal of the second delay line part (22) may differ from each other. This is because an input delay exists due to the difference in lengths of the first path (path1) and the second path (path2). In the embodiment of FIG. 15a, since the length of the first path (path1) is shorter than the length of the second path (path2), the input time interval of the input pulse (path1) through the first path (path1) can be smaller than the input time interval of the input pulse (path2) through the second path (path2).

FIG. 16a shows the configuration of the first delay line part and the second delay line part of FIG. 15b, and FIG. 16b is for explaining the operation of the code conversion part when two delay line parts are used according to an embodiment of the present invention.

In FIG. 16a, for convenience of explanation, each delay line part is shown to include 4 buffers and 4 flip-flops respectively.

In FIG. 16b, the fields of the table can represent the delay line part number, buffer index number, value of the first delay, value of the second delay, first sum value (1st rank), and first sum value (total rank). At this time, the first rank can indicate the rank regarding the sum values for the buffer indices within each delay line part. And the total rank can indicate the rank regarding sum values for all buffers of the first delay line part and the second delay line part. At this time, regarding the first rank and total rank, the buffer with the smallest sum value may have rank 1, and the buffer with the highest sum value may have the last rank. Or the opposite is also possible in other embodiments. The method for obtaining the sum value can be the same as described in FIG. 10.

The code conversion part (30) can be configured to generate one converted code by sorting and merging the elements of the first set (e.g., {(D1, 1), (D2, 2), (D3, 3), (D4, 4)}) listing the sum values of elements of the thermometer code output by the first delay line part (21) and buffer index pairs in ascending order of sum values, and the elements of the second set (e.g., {(D5, 5), (D6, 6), (D7, 7), (D8, 8)}) listing the sum values of elements of the thermometer code output by the second delay line part (22) and index pairs in ascending order of sum values.

That is, each element of the first set and each element of the second set can be sorted based on the ascending order of sum values.

For example, the output values based on buffer index from the first delay line part (21) may be {1, 2, 3, 4}, and the output values based on buffer index from the second delay line part (22) may be {5, 6, 7, 8}. And in the embodiment of FIG. 15b and FIG. 16a, the delay (d1) can be smaller than the delay (d5). Therefore, the sorted order can be like (D1, 1), (D2, 2), (D5, 5), (D3, 3), (D6, 6), (D4, 4), (D7, 7), (D8, 8). The output values of the flip-flops for each buffer index can be sorted in the sorted order. For example, the sorted values (buffer indices) can be 0(1), 0(2), 1(4), 1(6), 1(3), 1(5), 0(7), 0(8).

As described above, when a plurality of delay line parts (20) are used, slightly different input delays can be obtained depending on the arrangement. FIG. 17 described below shows the delay according to the arrangement when a plurality of delay line parts are used.

FIG. 17 shows graphs of delay according to the application status of the code conversion part according to an embodiment of the present invention.

FIG. 18 is a diagram for explaining the arrangement criteria of flip-flop output values and the increment value of the number of taps in FIG. 17 according to the application status of the code conversion part according to an embodiment of the present invention.

(a) of FIG. 17 shows a delay graph according to the number of taps in a state where the code conversion part (30) is not applied, and (b) of FIG. 17 shows a delay graph according to the number of taps in a state where the code conversion part (30) is applied.

The fields of the table in FIG. 18 include the arrangement criteria of flip-flop output values before and after sorting, and the arrangement order of total delay sum values.

Hereinafter, description will be made with reference to FIG. 17 and FIG. 18 together.

The horizontal axis of the graph (g1, g2) represents the number of taps (Number of taps). Referring to FIG. 16b, one tap may mean a pair of one buffer (delay element) (e.g., B1) and the flip-flop (FF1) connected thereto. For example, if the total number of buffers and pairs of flip-flops connected thereto is 1000, the total number of taps can be 1000.

The vertical axis of the graph (g1, g2) represents the delay time (ns). The delay time can mean the sum values of delays taken for data to be delivered to the output node of the flip-flop tapped at each buffer described in FIG. 14.

Referring to FIGS. 16a to 18 together, the increase in the number of taps in the graph (g1) can mean, for example, an increase in the buffer index. For example, the case where the number of taps is 4 on the horizontal axis of graph (g1) can mean buffer index 4. At this time, the delay value on the vertical axis of graph (g1) can be D4(=d1+d2+d3+d4+d14) as in FIG. 16b. For example, the case where the number of taps is 5 can mean buffer index 5. At this time, the delay value on the vertical axis of graph (g1) can be D5(=d5+d15) as in FIG. 16b. At this time, referring to FIG. 18, D4>D5 can be true. Here, it can be seen that the delay observed at the flip-flop of each tap does not increase as the index of the tap (e.g., index 4 -> index 5) increases, but cases where it locally decreases even if the index of the tap increases can occur.

On the other hand, the increase in the number of taps in graph (g2) does not mean the increase of buffer index, but can mean the increase of the rank according to the sorted order in the state where the output values of each flip-flop are sorted by the code conversion part (30). For example, the case where the number of taps is 4 on the horizontal axis of graph (g2) can mean buffer index 3 as the sorted buffer index position order is 1, 2, 5, 3. And the delay value on the vertical axis of graph (g2) in this case can be D3(=d1+d2+d3+d13). For example, if the number of taps is 5, the sorted buffer index position order is 1, 2, 5, 3, 6, so it can mean buffer index 6. And the delay value in this case can be D6(=d5+d6+d16). At this time, referring to FIG. 18, D3<D6 can be true.

That is, as in (a) of FIG. 17, when the code conversion part (30) of the present invention is not applied, it can be seen that the graph (g1) regarding the delay according to the increase in the number of taps does not achieve the property of monotonic increase. On the other hand, as in (b) of FIG. 17, when the code conversion part (30) of the present invention is applied, it can be seen that the graph (g2) regarding the delay according to the increase in the number of taps achieves a monotonic increase phenomenon without decrease.

For example, unlike ASIC which is a custom semiconductor, FPGA which allows direct design through programming can change the function of the chip according to programming. Therefore, unlike ASIC, the function of each component included in the FPGA can vary (or depending on the arrangement of components), so there may be cases where the delay decreases rather than consistently increasing every time the number of taps increases, thus a monotonic increase phenomenon without decrease may not be achieved.

However, as explained, it can be confirmed through graph (g2) that the code conversion part (30) can correct the property of monotonic increase of the first delay line part (20).

As described above, when multiple delay line parts (20) are used, the code conversion part can provide alignment of delays. As a result, errors due to jitter can be corrected, and a TDC with high time resolution can be provided. For example, if 4 delay line parts are configured in parallel to have a total of 9600 taps, a TDC having a resolution of 0.8 ps per tap can be provided.

FIG. 19 is a block diagram showing the main functional parts of a PCB board including an FPGA provided according to an embodiment of the present invention.

The sender (100) of FIG. 5 may include electronic devices including the TDC (150) and control unit (170). At this time, the TDC (150) and/or the control unit (170) may be implemented with an FPGA (1). And the FPGA (1) may be mounted on a PCB board (600) installed in the sender (100).

The PCB board (600) is a device capable of digital signal processing and may include not only the FPGA (1) but also a data interface (601), a clock generator (603), a power supply unit (604), and other functional parts not shown in FIG. 19.

The data interface (601) is a device enabling data exchange between the PCB board (600) and a computing device (700), and can be composed of USB, Ethernet, or UART, but is not limited thereto.

The clock generator (603) can provide a train of clock pulses counted by the FPGA (1).

The time interval between two selected signals calculated by the FPGA (1) can be output from the FPGA (1) and provided to the data interface (601). The data interface (601) can provide the time interval between the two signals to the computing device (700).

The power supply unit (604) supplies power used in the PCB board (600).

The computing device (700) may include a data interface (701), a CPU (702), and a memory (703). A binary file including configuration data for programming the FPGA (1) may be recorded in the memory (703). The CPU (702) can act to transfer the binary file to the data interface (601) via the data interface (701).

The binary file can be stored in the ROM (80) of the FPGA (1) and used by the FPGA (1).

The configuration data allows the FPGA (1) to configure predetermined digital circuits therein.

The digital circuit includes a signal receiving part (71) receiving a laser pulse detection signal (800) including a continuous pair of electrical pulses generated from the photodetector (110) included in the transmission device (100) of the Plug-and-Play type QKD system; a time difference determination part (72) configured to determine the time interval between the pair of electrical pulses; and an eavesdropping judgment part (73) determining that an eavesdropper exists on the quantum channel (300) when the determined time interval is different from a predetermined reference time interval. The names of the parts indicated by reference numbers 71, 72, 73 are presented as above for convenience of explanation, but specific names may be modified and presented as other names.

Also, the digital circuit may further include the aforementioned input signal generation part (10), first delay line part (21), second delay line part (22), code conversion part (30), clock pulse counting part (40), priority encoder part (50), and calculation part (60).

In one embodiment, the input signal generation part (10), first delay line part (21), second delay line part (22), code conversion part (30), clock pulse counting part (40), priority encoder part (50), and calculation part (60) may be included in the time difference determination part (72).

In FIG. 19, the computing device (700) is shown as including the data interface (701), CPU (702), and memory (703), but the FPGA (1) can provide the binary file if the binary file is provided as shown in FIG. 19 regardless of other configurations.

The name of the file containing the configuration data for programming the FPGA (1) may have a name other than the aforementioned binary file.

The ROM (80), the FPGA (1) containing the ROM (80), and the memory (703) provided according to embodiments of the present invention, respectively, can be considered as non-volatile recording media readable by an electronic device.

Using the above-described embodiments of the present invention, those skilled in the technical field to which the present invention belongs will be able to easily implement various modifications and corrections within the scope without departing from the essential characteristics of the present invention. The contents of each claim in the scope of patent claims can be combined with other claims that do not have a citation relationship within the scope that can be understood through this specification.

## Claims

1. A sender apparatus (100) determining the existence of an eavesdropper (500) present on a quantum channel (300) in a plug-and-play type QKD system, the sender apparatus comprising: a photodetector (110) configured to detect a continuous pair of laser pulses delivered through the quantum channel (300) and to output a laser pulse detection signal (800) including a continuous pair of electrical pulses corresponding to the detected pair of laser pulses; and a TDC (150) measuring a time interval between the pair of electrical pulses; wherein information regarding the measured time interval is used to determine whether an eavesdropper exists on the quantum channel.

2. The sender apparatus of a plug-and-play type QKD system according to claim 1, further comprising a control unit (170), wherein the control unit is configured to determine that an eavesdropper exists on the quantum channel if the measured time interval is different from a predetermined reference time interval.

3. The sender apparatus of a plug-and-play type QKD system according to claim 1, wherein the pair of laser pulses are configured to be transmitted back to the quantum channel after their energy is attenuated, and wherein a phase of one of the pair of laser pulses is configured to be modulated.

4. The sender apparatus of a plug-and-play type QKD system according to claim 3, wherein the sender apparatus is configured to randomly select one basis from among a plurality of bases for the modulation, and wherein the sender apparatus is configured to randomly select one quantum state from among a plurality of quantum states and encode the signal laser pulse into the selected quantum state.

5. The sender apparatus of a plug-and-play type QKD system according to claim 1, wherein the time interval is a time difference between a rising edge of a first electrical pulse generated first among the pair of electrical pulses and a rising edge of a second electrical pulse generated later.

6. The sender apparatus of a plug-and-play type QKD system according to claim 1, wherein the TDC comprises: a first delay line part (20) to which an input pulse having a width equal to a time difference between a first generation time point of the first electrical pulse and a second generation time point of the second electrical pulse is input; and a calculation part (60) determining the time interval using a thermometer code output by the first delay line part.

7. The sender apparatus of a plug-and-play type QKD system according to claim 6, wherein the TDC further comprises a code conversion part (30) that outputs by converting an order of elements of the thermometer code, wherein the calculation part is configured to determine the generation time difference using the converted code output by the code conversion part, wherein the converted code is obtained by sorting the order of the elements of the thermometer code according to a predetermined criterion, and wherein the predetermined criterion is a data path delay from an output node of the input pulse to output nodes of each of a plurality of flip-flops (FF) included in the first delay line part.

8. The sender apparatus of a plug-and-play type QKD system according to claim 6, wherein the TDC is implemented by any one device among FPGA (Field Programmable Gate Array), ASIC (Application Specific Integrated Circuit), and IC (Integrated Circuit), and any one of the devices is programmed to include the first delay line part and the calculation part.

9. The sender apparatus of a plug-and-play type QKD system according to claim 7, wherein the TDC further comprises a second delay line part to which the input pulse is input, wherein the code conversion part is configured to generate the converted code by arranging and merging elements of the thermometer code output by the first delay line part and elements of the thermometer code output by the second delay line part according to a predetermined second criterion, and wherein the predetermined second criterion is a data path delay from an output node of the input pulse to output nodes of each of a plurality of flip-flops included in the first delay line part and the second delay line part.

10. The sender apparatus of a plug-and-play type QKD system according to claim 8, wherein the TDC is configured to use a clock signal (clk) having a period shorter than a time difference between the pair of laser pulses output by a receiving device of the QKD system, and wherein the TDC further comprises: an input signal generation part (10) generating an input pulse having a width equal to a time difference between a rising edge generation time point of the first electrical pulse and a rising edge generation time point of the second electrical pulse; a clock pulse counting part (40) counting the number of clock pulses of the clock signal generated during a holding period of the input pulse; and the calculation part determining a value of the generation time difference using a first thermometer code (TC1) output by the code conversion part at a time of a rising edge of a first clock pulse among the generated clock pulses, a second thermometer code (TC2) output by the code conversion part at a time of a rising edge of a clock pulse generated immediately after the last clock pulse among the generated clock pulses, and the number of counted clock pulses.

11. A non-volatile recording medium readable by an electronic device, on which a binary file including configuration data for programming an FPGA is recorded, wherein the FPGA is included in a plug-and-play type QKD system, to construct a digital circuit comprising: a signal receiving part (71) receiving a laser pulse detection signal (800) including a continuous pair of electrical pulses generated from a photodetector included in a sender apparatus of the QKD system; a time difference determination part (72) configured to determine a time interval between the pair of electrical pulses; and an eavesdropping judgment part (73) determining that an eavesdropper exists on a quantum channel when the determined time interval is different from a predetermined reference time interval.

12. The non-volatile recording medium according to claim 11, wherein the digital circuit further comprises: a first delay line part (20) to which an input pulse having a width equal to a time difference between a first generation time point of a first electrical pulse generated first among the pair of electrical pulses and a second generation time point of a second electrical pulse generated later is input; and a calculation part (60) determining the time interval using a thermometer code output by the first delay line part.

13. The non-volatile recording medium according to claim 11, wherein the digital circuit further comprises a code conversion part (30) that outputs by converting an order of elements of the thermometer code, wherein the calculation part is configured to determine the time interval using the converted code output by the code conversion part, wherein the converted code is obtained by sorting the order of the elements of the thermometer code according to a predetermined criterion, and wherein the predetermined criterion is a data path delay from an output node of the input pulse to output nodes of each of a plurality of flip-flops (FF) included in the first delay line part.

14. The non-volatile recording medium according to claim 13, wherein the digital circuit further comprises a second delay line part to which the input pulse is input, wherein the code conversion part is configured to generate the converted code by arranging and merging elements of the thermometer code output by the first delay line part and elements of the thermometer code output by the second delay line part according to a predetermined second criterion, and wherein the predetermined second criterion is a data path delay from an output node of the input pulse to output nodes of each of a plurality of flip-flops included in the first delay line part and the second delay line part.

15. The non-volatile recording medium according to claim 12, wherein the digital circuit is configured to use a clock signal (clk) having a period shorter than a time difference between the pair of laser pulses output by a receiving device of the QKD system, and wherein the digital circuit further comprises: an input signal generation part generating an input pulse having a width equal to a time difference between a rising edge generation time point of the first electrical pulse and a rising edge generation time point of the second electrical pulse; a clock pulse counting part counting the number of clock pulses of the clock signal generated during a holding period of the input pulse; and the calculation part determining a value of the generation time difference using a first thermometer code output by the code conversion part at a time of a rising edge of a first clock pulse among the generated clock pulses, a second thermometer code output by the code conversion part at a time of a rising edge of a clock pulse generated immediately after the last clock pulse among the generated clock pulses, and the number of counted clock pulses.
